# EUROPÄISCHE PATENTANMELDUNG

(11) **EP 3 770 326 A1**
(43) Veröffentlichungstag der Anmeldung: **27.01.2021**
(21) Anmeldenummer: 20168626.8
(22) Anmeldetag: 08.04.2020
(51) Int. Cl.: E01C 19/48

(54) **STRASSENFERTIGER MIT GELÄNDERMODUL AM BOHLENLAUFSTEG**

(30) Priorität: 24.07.2019 DE 202019104082 U
(71) Anmelder: Joseph Vögele AG, 67067 Ludwigshafen (DE)
(72) Erfinder: BUSCHMANN, Martin, 67435 Neustadt (DE); WEISER, Ralf, 68526 Ladenburg (DE); GLÖCKNER, Tom, 67659 Kaiserslautern (DE); THEOBALD, Maximilian, 67061 Ludwigshafen (DE)
(74) Vertreter: Grünecker Patent- und Rechtsanwälte PartG mbB

(57) **Zusammenfassung**

Die vorliegende Erfindung betrifft einen Straßenfertiger (1) mit einer Zugmaschine (2), der eine mittels Zugarmen (3) an der Zugmaschine (2) angekoppelte und quer zur Fahrtrichtung (F) ausgerichtete Einbaubohle (4) aufweist, wobei am hinteren Ende der Einbaubohle (4) ein Bohlenlaufsteg (5) vorgesehen ist, wobei an dem Bohlenlaufsteg (5) mindestens ein Geländermodul (6) angebracht ist, wobei an dem Geländermodul (6) mindestens eine Verstauvorrichtung (7) zur Aufnahme von Gegenständen angebracht ist.

## Beschreibung

Die vorliegende Erfindung bezieht sich auf einen Straßenfertiger mit einer Einbaubohle und einem Bohlenlaufsteg gemäß dem Oberbegriff des Anspruchs 1.

Es ist bekannt, dass ein Straßenfertiger eine bewegbar gelagerte Einbaubohle zur Herstellung eines neuen Straßenbelags aufweist. Das Einbaumaterial wird aus einem Gutbunker heraus mittels einer Längsfördereinrichtung entgegen einer Einbaurichtung nach hinten zu einer am Straßenfertiger bewegbar gelagerten Einbaubohle transportiert. Das Einbaumaterial wird vor der Einbaubohle ausgebreitet und von der Einbaubohle verdichtet, um den neuen Straßenbelag herzustellen, was bei hohen Temperaturen erfolgt. Während dieser Baumaßnahme muss sich der Bohlenbediener oft von einer Seite des Straßenfertigers zur anderen Seite bewegen, um z.B. Einbauparameter oder andere Einstellungen anzupassen. Oder der Bohlenbediener möchte auf der Bedienplattform der Zugmaschine oder auf der Abdeckung der Einbaubohle abgelegte Werkzeuge wie z.B. Schaufeln, Wasserwaagen usw. aufnehmen. Um dies zu ermöglichen, ist am hinteren Ende der Einbaubohle typischerweise ein Bohlenlaufsteg vorgesehen. Dies ist beispielsweise aus EP 3 067 774 A1 bekannt.

Aufgabe der Erfindung ist es, Straßenfertiger in bedienerfreundlicher Hinsicht zu verbessern.

Gelöst wird diese Aufgabe durch einen Straßenfertiger mit den Merkmalen des Anspruchs 1. Vorteilhafte Weiterbildungen der Erfindung sind in den Unteransprüchen angeführt.

Der erfindungsgemäße Straßenfertiger mit einer Zugmaschine, der eine mittels Zugarmen an der Zugmaschine angekoppelte und quer zur Fahrtrichtung ausgerichtete Einbaubohle aufweist, wobei am hinteren Ende der Einbaubohle ein Bohlenlaufsteg vorgesehen ist, sieht vor, dass an dem Bohlenlaufsteg mindestens ein Geländermodul angebracht ist, wobei an dem Geländermodul mindestens eine Verstauvorrichtung zur Aufnahme von Gegenständen angebracht ist, z.B. zur Aufnahme von Werkzeugen in diverser Form und Größe beim Asphalteinbau sowie von persönlichen Gegenständen für Bohlenbediener.

Dies schafft Stauraummöglichkeiten für Bohlenbediener, ohne dabei den Raum auf dem Laufsteg einzuschränken oder zu besetzen, wobei der Laufsteg frei begehbar bleibt. Des Weiteren vereinfacht das Geländermodul dem Bediener den Aufstieg auf die Bohle und kann ihm dort Halt geben, auch bei erhöhter Bohlenstellung.

In einer bevorzugten Variante ist das Geländermodul an einem vom übrigen Bereich der Einbaubohle schwingungsentkoppelten Teil des Laufstegs befestigt. Dies reduziert Vibrationen und die daraus resultierende Lärmentwicklung und die Gefahr des Verlierens von Gegenständen.

Besonders vorteilhaft ist, wenn das Geländermodul lösbar, insbesondere werkzeuglos lösbar, an dem Bohlenlaufsteg angebracht ist. Dies vereinfacht den Auf- und Rückbau der Geländermodulkonstruktion.

In einer platzsparenden Variante ist das Geländermodul mit dem Bohlenlaufsteg klappbar angebracht, sodass die gesamte Konstruktion auf einfache Weise vollständig zurückbaubar ist.

In einer vorteilhaften Variante ist das Geländermodul an verschiedenen Positionen an dem Bohlenlaufsteg anbringbar. Dies ermöglicht, die Position des Geländermoduls und darauf angebrachte Verstauvorrichtungen individuell anzupassen.

Zweckmäßig ist, wenn das Geländermodul mindestens eine Laufstegerweiterung aufweist. Diese Erweiterung des Laufstegs bietet dem Bediener zusätzlichen Raum zum Stehen oder beim Abstellen von Gegenständen. Durch die Laufstegerweiterung wird sichergestellt, dass keine Gegenstände oder Werkzeuge auf den Laufsteg selbst hinausragen und diesen blockieren oder dessen Begehbarkeit mindern.

Vorzugsweise weist das Geländermodul mindestens einen Halter auf, welches die An- und Unterbringung von diversen Werkzeugen, insbesondere kleinen Werkzeugen sowie von persönlichen Gegenständen der Bohlenbediener, ermöglicht.

Bevorzugt ist der Halter lösbar, insbesondere werkzeuglos lösbar, an dem Geländermodul anbringbar, was den Auf- und Umbau des Halters an dem Geländermodul vereinfacht.

In einer anderen bevorzugten Ausführungsvariante weist das Geländermodul mindestens ein Lochblech auf, welches eine variable An- und Unterbringung von diversen Werkzeugen, insbesondere hängenden Werkzeugen, sowie von persönlichen Gegenständen der Bohlenbediener ermöglicht. In das Lochblech könnten auch ein oder mehrere Halter zur Aufnahme von Gegenständen eingehängt werden. Das Lochblech garantiert eine individuelle Anpassung bei der Unterbringung von Werkzeugen und persönlichen Gegenständen.

Vorzugsweise ist das Lochblech lösbar, insbesondere werkzeuglos lösbar, an dem Geländermodul anbringbar ist, was den Auf- und Umbau des Lochblechs auf dem Geländermodul vereinfacht. In einer anderen vorteilhaften Ausführungsvariante weist das Geländermodul eine Werkzeugkiste auf, welche die An- und Unterbringung von kleinen und großen Werkzeugen, insbesondere kleinen Werkzeugen mit einer Länge von bis zu ca. 50 cm, sowie von persönlichen Gegenständen der Bohlenbediener ermöglicht.

Insbesondere vorteilhaft ist, wenn die Werkzeugkiste lösbar, insbesondere werkzeuglos lösbar, an dem Geländermodul anbringbar ist, was den Auf- und Umbau der Werkzeugkiste an dem Geländermodul vereinfacht.

Im Folgenden werden Ausführungsbeispiele der Erfindung anhand der Figuren näher beschrieben.

Dabei zeigt
- Fig. 1: einen Straßenfertiger zum Herstellen eines Straßenbelags, einschließlich einer daran befestigten Einbaubohle;
- Fig. 2: eine perspektivische Vorderansicht eines Geländermoduls mit Verstauvorrichtungen von schräg vorne, das an dem Bohlenlaufsteg angebracht ist;
- Fig. 3: eine perspektivische Darstellung des Geländermoduls von Figur 2 von schräg hinten.

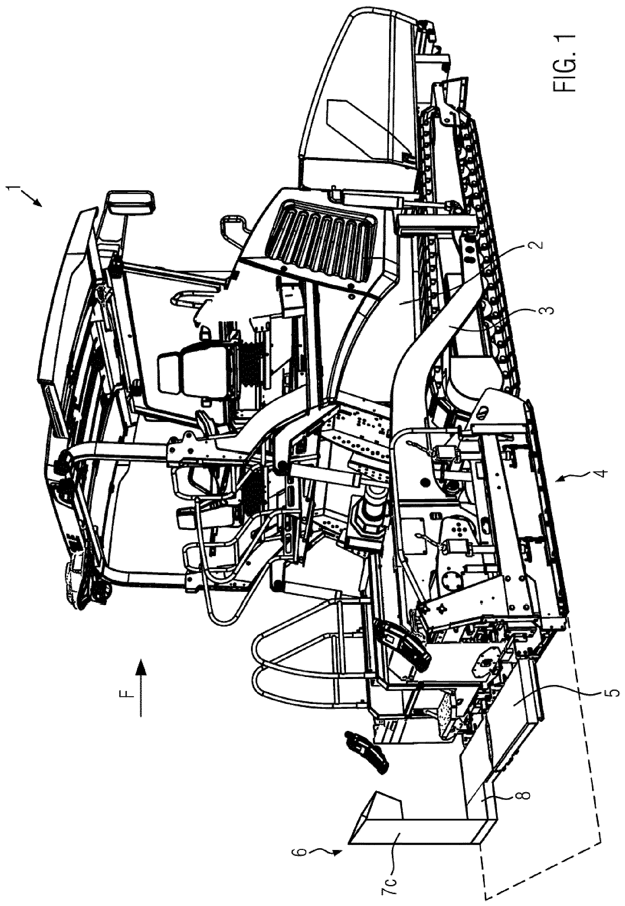

Figur 1 zeigt einen Straßenfertiger 1 zur Herstellung eines Straßenbelags. Der Straßenfertiger 1 umfasst eine Zugmaschine 2 und eine Einbaubohle 4. Die Einbaubohle 4 ist mittels Zugarmen 3 an die Zugmaschine 2 gekoppelt und wird beim Betrieb des Straßenfertigers 1 von der Zugmaschine 2 in die durch die Fahrtrichtung F gekennzeichnete Arbeitsrichtung geschleppt. Das Einbaumaterial wird vor der Einbaubohle 4 ausgebreitet und von der Einbaubohle 4 verdichtet, um den neuen Straßenbelag herzustellen. Am hinteren Ende der Einbaubohle 4 ist ein Bohlenlaufsteg 5 als eine Art Brücke vorgesehen, auf dem die Bohlenbediener in Querrichtung über dem Einbaumaterial durchlaufen können, ohne den noch heißen, neuen Straßenbelag betreten zu müssen.

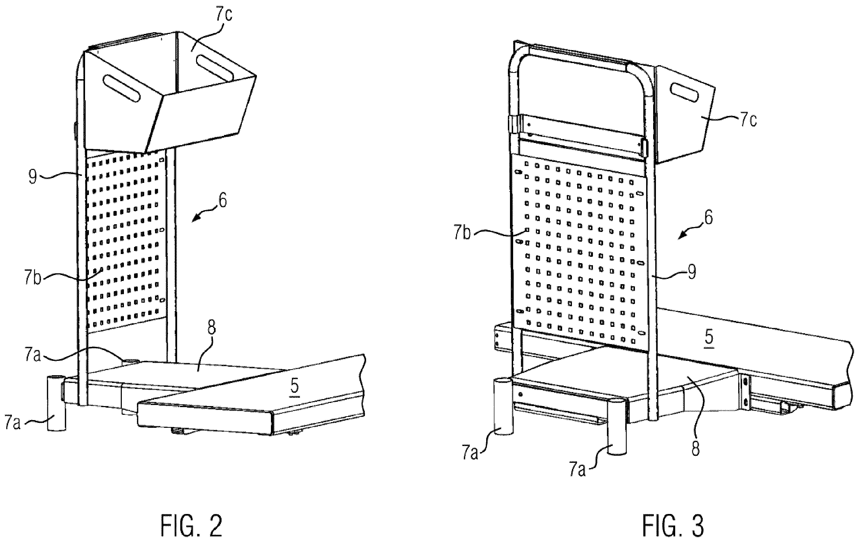

Figur 2 zeigt den erfindungsgemäßen Bohlenlaufsteg 5 von schräg vorne, an dem ein Geländermodul 6 angebracht ist.

Figur 3 zeigt den erfindungsgemäßen Bohlenlaufsteg 5 von schräg hinten, an dem ein Geländermodul 6 angebracht ist.

Die Konstruktion des Geländermoduls 6 ist im Gesamten leicht zurückbaubar. Das Geländermodul 6 kann an unterschiedlichen Stellen auf dem Bohlenlaufsteg 5 positioniert werden. Für die Anbringung des Geländemoduls 6 können Verbindungsbeschläge verwendet werden.

Das in Figur 2 und Figur 3 beispielhaft dargestellte Geländermodul 6 weist eine Laufstegerweiterung 8 auf, welche den Laufsteg in Fahrtrichtung gesehen nach hinten erweitert. Die Laufstegerweiterung 8 kann so ausgebildet sein, dass sie das Gewicht von einem oder mehreren Bedienerpersonen und zusätzlich das Gewicht der Werkzeuge, welche während des Baus eines Straßenbelages verwendet sind, hält.

Darüber hinaus könnte die Laufstegerweiterung 8 an einem der Endbereiche des Bohlenlaufstegs 5 als eine Erweiterung in Fahrtrichtung F gesehen angebracht werden.

Die Laufstegerweiterung 8 kann mehrere teleskopschienenartige Auszugselemente aufweisen, wodurch die Laufstegerweiterung 8 entlang ihrer Länge in Fahrtrichtung F erweitert wird. Des Weiteren können die Bauelemente der Laufstegerweiterung 8 auf den Bohlenlaufsteg 5 klappbar ausgebildet sein.

Das in Figur 2 und Figur 3 beispielhaft dargestellte Geländermodul 6 kann ein oder mehrere Verstauvorrichtungen 7 zur Aufnahme von Gegenständen aufweisen, zum Beispiel in Form eines Halters 7a.

Halter 7a von unterschiedlicher Größe und Form können an dem Geländermodul 6 beispielsweise an dem hinteren Ende der Laufstegerweiterung 8 gegenüber der Anbringungsstelle der Laufstegerweiterung 8 an dem Bohlenlaufsteg 5 lösbar, insbesondere werkzeuglos lösbar, für die Anbringung z.B. großer und stielbehafteter Gegenstände angeordnet sein. Es ist auch möglich, die Halter 7a an einer anderen Position auf dem Geländermodul 6 anzuordnen. Die Halter 7a können zum Beispiel die Form eines Bügels haben, der insbesondere zur Aufnahme eines Schaufelblatts geeignet ist, die Form einer unten verschlossenen Rohrhülse oder eines Bechers, der derart gestaltet ist, dass er einen Besen- oder Schaufelstiel aufnehmen könnte. Der Halter 7a kann mit einer abschließbaren Abdeckung versehen sein.

Eine andere Form einer Verstauvorrichtung 7 zur Aufnahme von Gegenständen, die an dem Geländermodul 6 angeordnet ist, kann ein Lochblech 7b sein, insbesondere für die Verstauung von aufhängbaren Gegenständen. Das Geländermodul 6 weist weiterhin mehrere ineinandergreifende Stangen 9 auf, welche die tragende Struktur bilden und an denen das Lochblech 7b angeordnet ist.

Das Lochblech 7b kann doppelwandig abgebildet sein, sodass auch lange Werkzeuge, wie z.B. Besen, in die Löcher hineingestellt werden können.

Das Lochblech 7b kann unterschiedliche Größen und Formen aufweisen und kann am hinteren Ende der Laufstegerweiterung 8 gegenüber der Anbringungsstelle der Laufstegerweiterung 8 an dem Bohlenlaufsteg 5 lösbar, insbesondere werkzeuglos lösbar, angebracht sein. Es ist auch möglich, das Lochblech 7b an einer anderen Position auf dem Geländermodul 6 anzuordnen.

Eine andere Form einer Verstauvorrichtung 7 zur Aufnahme von Gegenständen, die an dem Geländermodul 6 angeordnet sind, kann eine Werkzeugkiste 7c sein, insbesondere für die Verstauung von Gegenständen, die nicht in den Halter 7a hineinpassen oder an das Lochblech 7b gehängt werden können.

Die Werkzeugkiste 7c kann unterschiedliche Größen und Formen aufweisen und, wie in Figur 2 und Figur 3 dargestellt, z.B. am oberen Ende des Geländermoduls 6 an den Stangen 9 angeordnet sein. Es ist auch möglich, die Werkzeugkiste 7c an anderen Positionen auf dem Geländermodul 6 anzuordnen. Die Werkzeugkiste 7c kann zum Schutz vor Regen oder Diebstahl mit einem abschließbaren Deckel geschlossen werden.

## Patentansprüche

1. Straßenfertiger (1) mit einer Zugmaschine (2), der eine mittels Zugarmen (3) an der Zugmaschine (2) angekoppelte und quer zur Fahrtrichtung (F) ausgerichtete Einbaubohle (4) aufweist, wobei am hinteren Ende der Einbaubohle (4) ein Bohlenlaufsteg (5) vorgesehen ist, **dadurch gekennzeichnet, dass** an dem Bohlenlaufsteg (5) mindestens ein Geländermodul (6) angebracht ist, wobei an dem Geländermodul (6) mindestens eine Verstauvorrichtung (7) zur Aufnahme von Gegenständen angebracht ist.

2. Straßenbaumaschine nach Anspruch 1, **dadurch gekennzeichnet, dass** das Geländermodul (6) lösbar, insbesondere werkzeuglos lösbar, an dem Bohlenlaufsteg (5) angebracht ist.

3. Straßenbaumaschine nach Anspruch 1 oder 2, **dadurch gekennzeichnet, dass** das Geländermodul (6) zusammen mit dem Bohlenlaufsteg (5) klappbar an der Einbaubohle (4) angebracht ist.

4. Straßenbaumaschine nach einem der vorigen Ansprüche, **dadurch gekennzeichnet, dass** das Geländermodul an einem schwingungsentkoppelten Teil (5a) des Bohlenlaufstegs (5) befestigt ist.

5. Straßenbaumaschine nach einem der vorigen Ansprüche, **dadurch gekennzeichnet, dass** das Geländermodul (6) an verschiedenen Positionen an dem Bohlenlaufsteg (5) anbringbar ist.

6. Straßenbaumaschine nach einem der vorigen Ansprüche, **dadurch gekennzeichnet, dass** das Geländermodul (6) mindestens eine Laufstegerweiterung (8) aufweist.

7. Straßenbaumaschine nach einem der vorigen Ansprüche, **dadurch gekennzeichnet, dass** das Geländermodul (6) mindestens einen Halter (7a) aufweist.

8. Straßenbaumaschine nach Anspruch 7, **dadurch gekennzeichnet, dass** der Halter (7a) lösbar, insbesondere werkzeuglos lösbar, an dem Geländermodul (6) anbringbar ist.

9. Straßenbaumaschine nach einem der vorigen Ansprüche, **dadurch gekennzeichnet, dass** das Geländermodul (6) mindestens ein Lochblech (7b) aufweist.

10. Straßenbaumaschine nach Anspruch 9, **dadurch gekennzeichnet, dass** das Lochblech (7b) lösbar, insbesondere werkzeuglos lösbar, an dem Geländermodul (6) angebracht ist.

11. Straßenbaumaschine nach einem der vorigen Ansprüche, **dadurch gekennzeichnet, dass** das Geländermodul (6) eine Werkzeugkiste (7c) aufweist.

12. Straßenbaumaschine nach Anspruch 11, **dadurch gekennzeichnet, dass** die Werkzeugkiste (7c) lösbar, insbesondere werkzeuglos lösbar, an dem Geländermodul (6) angebracht ist.
